# EUROPEAN PATENT APPLICATION

(11) **EP 4 024 166 A1**
(43) Date of publication of application: **06.07.2022**
(21) Application number: 20860064.3
(22) Date of filing: 06.08.2020
(51) Int. Cl.: G06F 1/3206, G06F 1/3212

(54) **DATA SCANNING METHOD, MOBILE TERMINAL, AND NON-VOLATILE COMPUTER-READABLE STORAGE MEDIUM**

(30) Priority: 02.09.2019 CN 201910824402
(71) Applicant: GUANGDONG OPPO MOBILE TELECOMMUNICATIONS CORP., LTD., Dongguan, Guangdong 523860 (CN)
(72) Inventor: CHEN, Biao, Dongguan, Guangdong 523860 (CN)
(74) Representative: Thorniley, Peter
(86) International application number: PCT/CN2020/107390
(87) International publication number: WO 2021/042934

(57) **Abstract**

Provided are a data scanning method, a mobile terminal (100), and a non-volatile computer-readable storage medium (200). The data scanning method includes: obtaining trigger-associated information; starting to scan data in response to the trigger-associated information satisfying a trigger condition, and obtaining interruption-associated information in a process of scanning the data; and stopping scanning the data in response to the interruption-association information satisfying a stop condition.

## Description

### CROSS-REFERENCE TO RELATED APPLICATION

This application claims the priority and rights of the Patent Application No. 201910824402.6, filed with the China National Intellectual Property Administration on Sep. 2, 2019, the entire disclosure of which is incorporated herein by reference.

### FIELD

The present disclosure relates to the field of data processing technologies, and more particularly, to a data scanning method, a mobile terminal and a non-volatile computer-readable storage medium.

### BACKGROUND

A mobile phone can provide a function of picture scanning, such as scanning a picture to identify a key person in the picture, classifying pictures based on information in the pictures, etc.

### SUMMARY

Embodiments of the present disclosure provide a data scanning method, a mobile terminal, and a non-volatile computer-readable storage medium.

The data scanning method according to an embodiment of the present disclosure is applied in a mobile terminal. The data scanning method includes: obtaining trigger-associated information; starting to scan data in response to the trigger-associated information satisfying a trigger condition; obtaining interruption-associated information in a process of scanning the data; and stopping scanning the data in response to the interruption-associated information satisfying a stop condition.

The mobile terminal according to an embodiment of the present disclosure includes a processor. The processor is configured to: obtain trigger-associated information; start to scan data in response to the trigger-associated information satisfying a trigger condition; obtain interruption-associated information in a process of scanning the data; and stop scanning the data in response to the interruption-associated information satisfying a stop condition.

The non-volatile computer-readable storage medium according to an embodiment of the present disclosure includes computer-readable instructions. The computer-readable instructions, when executed by a processor, cause the processor to implement a data scanning method including: obtaining trigger-associated information; starting to scan data in response to the trigger-associated information satisfying a trigger condition; obtaining interruption-associated information in a process of scanning the data; and stopping scanning the data in response to the interruption-associated information satisfying a stop condition.

The additional aspects and advantages of the embodiments of the present disclosure will be partly given in the following description, partly become apparent from the following description or be learned through the practice of the present disclosure.

### BRIEF DESCRIPTION OF DRAWINGS

The above and/or additional aspects and advantages of the present disclosure will become apparent and easy to understand from the description of the embodiments in conjunction with the following drawings.
FIG. 1 is a schematic diagram of a structure of a mobile terminal according to some embodiments of the present disclosure.
FIG. 2 is a schematic flowchart of a data scanning method according to some embodiments of the present disclosure.
FIG. 3 is a schematic flowchart of a data scanning method according to some embodiments of the present disclosure.
FIG. 4 is a schematic flowchart of a data scanning method according to some embodiments of the present disclosure.
FIG. 5 is a schematic flowchart of a data scanning method according to some embodiments of the present disclosure.
FIG. 6 is a schematic flowchart of a data scanning method according to some embodiments of the present disclosure.
FIG. 7 is a schematic flowchart of a data scanning method according to some embodiments of the present disclosure.
FIG. 8 is a schematic flowchart of a data scanning method according to some embodiments of the present disclosure.
FIG. 9 is a schematic flowchart of a data scanning method according to some embodiments of the present disclosure.
FIG. 10 is a schematic flowchart of a data scanning method according to some embodiments of the present disclosure.
FIG. 11 is a schematic flowchart of a data scanning method according to some embodiments of the present disclosure.
FIG. 12 is a schematic flowchart of a data scanning method according to some embodiments of the present disclosure.
FIG. 13 is a schematic diagram of interaction between a non-volatile computer-readable storage medium and a processor according to some embodiments of the present disclosure.

### DESCRIPTION OF EMBODIMENTS

The embodiments of the present disclosure are described in detail below. Examples of the embodiments are shown in the accompanying drawings, throughout which the same or similar reference numerals indicate the same or similar elements or elements with the same or similar functions. The following embodiments described with reference to the drawings are exemplary and are only used to explain the embodiments of the present disclosure, and should not be understood as limitations on the embodiments of the present disclosure.

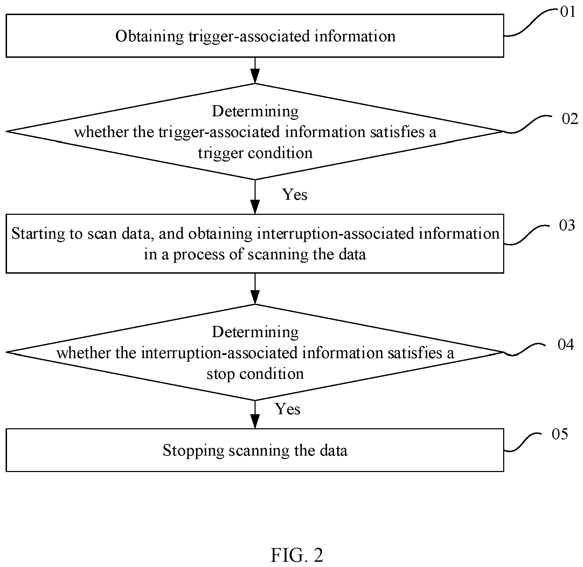

Referring to FIG. 2, a data scanning method according to an embodiment of the present disclosure includes: obtaining trigger-associated information; starting to scan data in response to the trigger-associated information satisfying a trigger condition; obtaining interruption-associated information in a process of scanning the data; and stopping scanning the data in response to the interruption-associated information satisfying a stop condition.

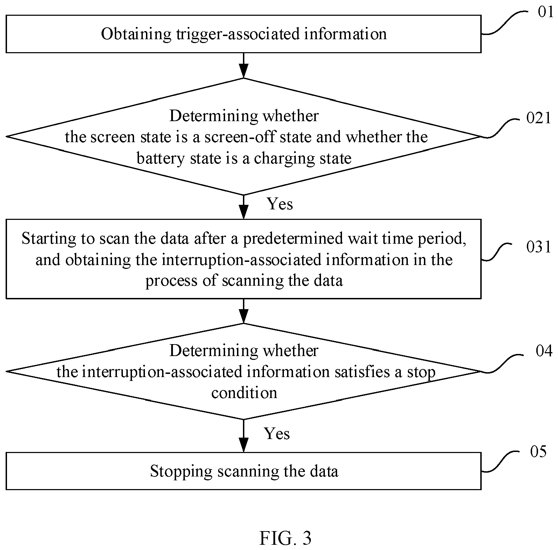

Referring to FIG. 3, in some embodiments, the trigger-associated information includes a screen state of a mobile terminal and a battery state of the mobile terminal. In response to the screen state being a screen-off state and the battery state being a charging state, the trigger-associated information is determined as satisfying the trigger condition. Starting to scan the data in response to the trigger-associated information satisfying the trigger condition includes: starting to scan the data after a predetermined wait time period.

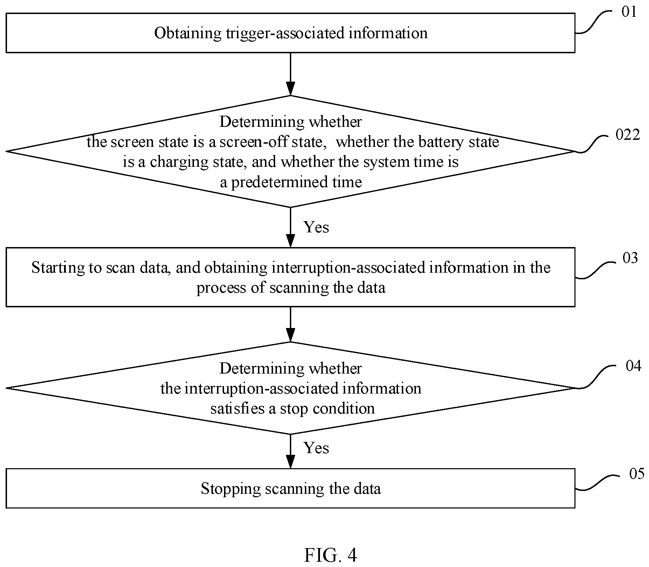

Referring to FIG. 4, in some embodiments, the trigger-associated information includes a screen state of the mobile terminal, a battery state of the mobile terminal, and a system time. In response to the screen state being a screen-off state, the battery state being a charging state, and the system time being a predetermined time, the trigger-associated information is determined as satisfying the trigger condition.

In some embodiments, the predetermined time is randomly set by the mobile terminal.

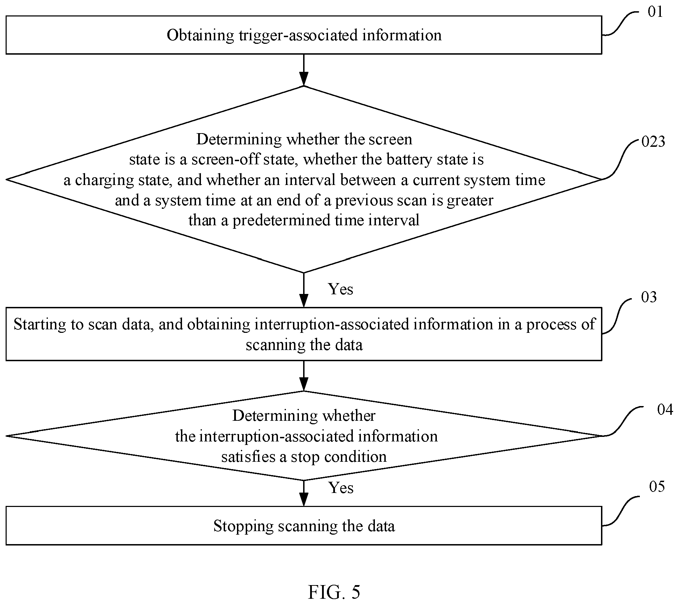

Referring to FIG. 5, in some embodiments, the trigger-associated information includes a screen state of the mobile terminal, a battery state of the mobile terminal, a system time, and a scanning time interval. In response to the screen state being a screen-off state, the battery state being a charging state, and an interval between a current system time and a system time at an end of a previous scan being greater than a predetermined time interval, the trigger-associated information is determined as satisfying the trigger condition.

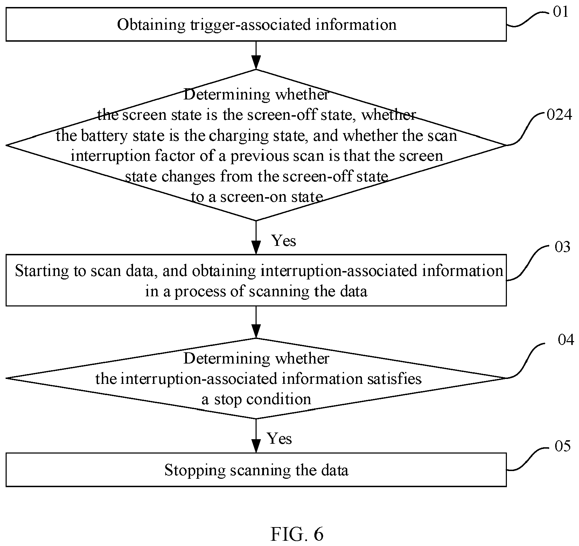

Referring to FIG. 6, in some embodiments, the trigger-associated information includes a screen state of the mobile terminal, a battery state of the mobile terminal, and a scanning interruption factor. In response to the screen state being a screen-off state, the battery state being a charging state, and the scanning interruption factor of a previous scan being that the screen state changes from the screen-off state to a screen-on state, the trigger-associated information is determined as satisfying the trigger condition.

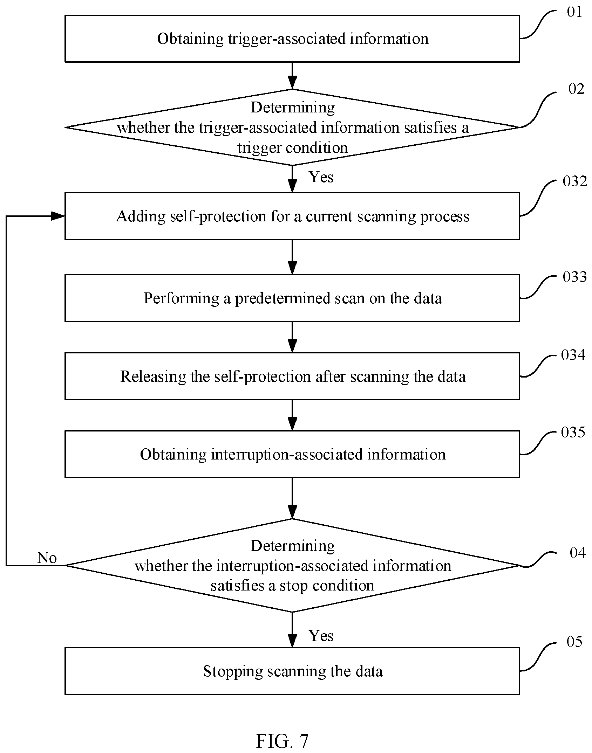

Referring to FIG. 7, in some embodiments, starting to scan data and obtaining the interruption-associated information in the process of scanning the data include: adding self-protection for a current scanning process; performing a predetermined scan on the data, the predetermined scan including at least one of a scan for video highlight, a scan for person, and a scan for tag; releasing the self-protection after scanning the data; and obtaining the interruption-associated information.

In some embodiments, when the predetermined scan includes at least two of the scan for video highlight, the scan for person, and the scan for tag, performing the predetermined scan on the data includes: performing a plurality of predetermined scans serially.

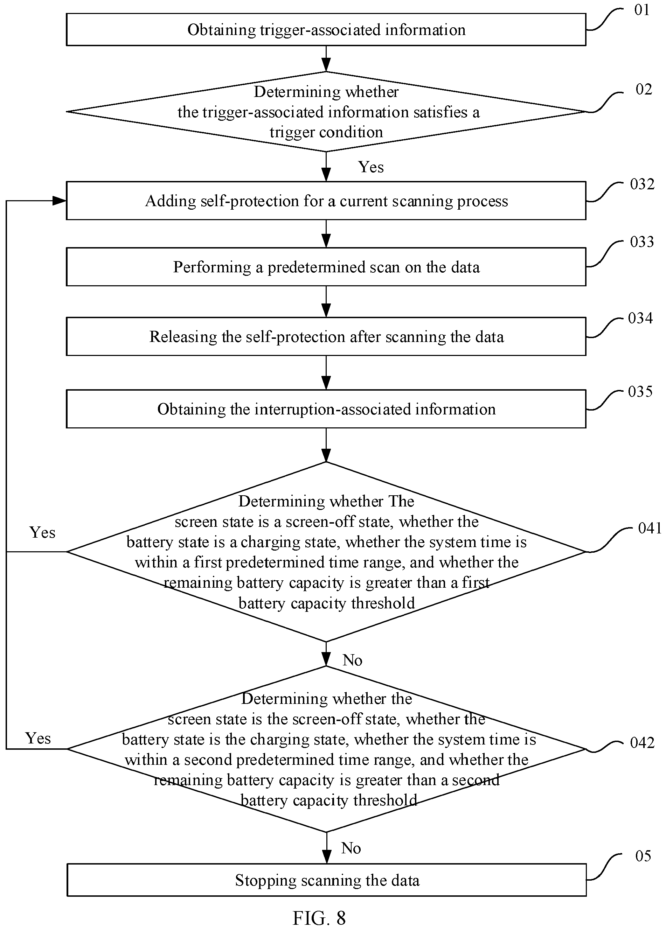

Referring to FIG. 8, in some embodiments, the interruption-associated information includes a screen state of the mobile terminal, a battery state of the mobile terminal, a system time, and a remaining battery capacity. In response to the screen state being a screen-off state, the battery state being a charging state, the system time being within a first predetermined time range, and the remaining battery capacity being greater than a first battery capacity threshold, the interruption-associated information is determined as not satisfying the stop condition. In response to the screen state being the screen-off state, the battery state being the charging state, the system time being within a second predetermined time range, and the remaining battery capacity being greater than a second battery capacity threshold, the interruption-associated information is determined as not satisfying the stopping condition, the first battery capacity threshold being smaller than the second battery capacity threshold. The data scanning method further includes: continuing scanning the data in response to the interruption-associated information not satisfying the stop condition.

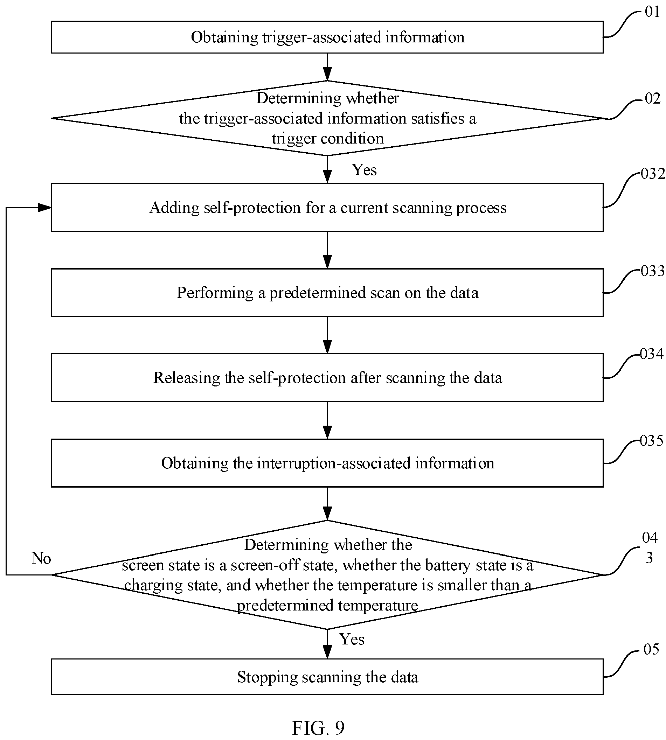

Referring to FIG. 9, in some embodiments, the interruption-associated information includes a screen state of the mobile terminal, a battery state of the mobile terminal, and a temperature. In response to the screen state being a screen-off state, the battery being is a charging state, and the temperature being smaller than a predetermined temperature, the interruption-associated information is determined as not satisfying the stop condition. The data scanning method further includes: continuing scanning the data in response to the interruption-associated information not satisfying the stop condition.

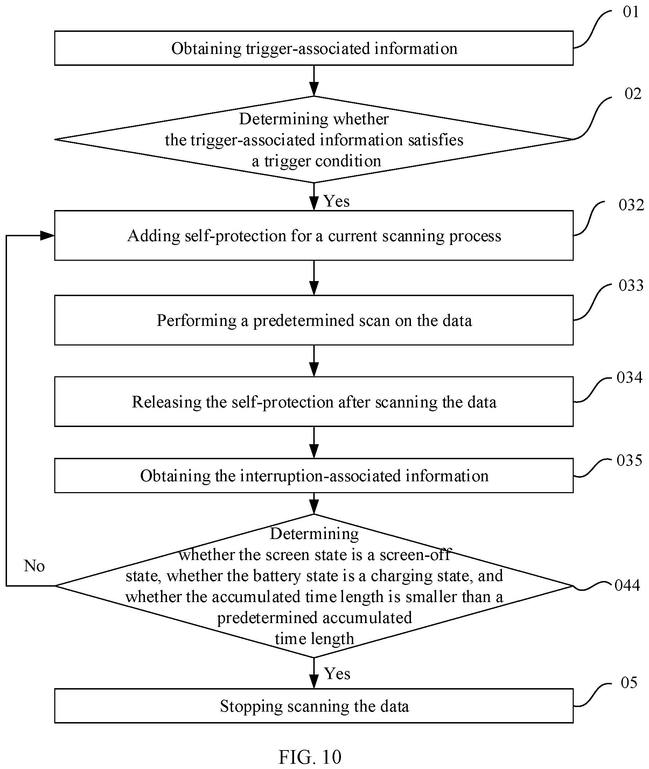

Referring to FIG. 10, in some embodiments, the interruption-associated information includes a screen state of the mobile terminal, a battery state of the mobile terminal, and an accumulated time length. In response to the screen state being a screen-off state, the battery state being a charging state, and the accumulated time length being smaller than a predetermined accumulated time length, the interruption-associated information is determined as not satisfying the stop condition. The data scanning method further includes: continuing scanning the data in response to the interruption-associated information not satisfying the stop condition.

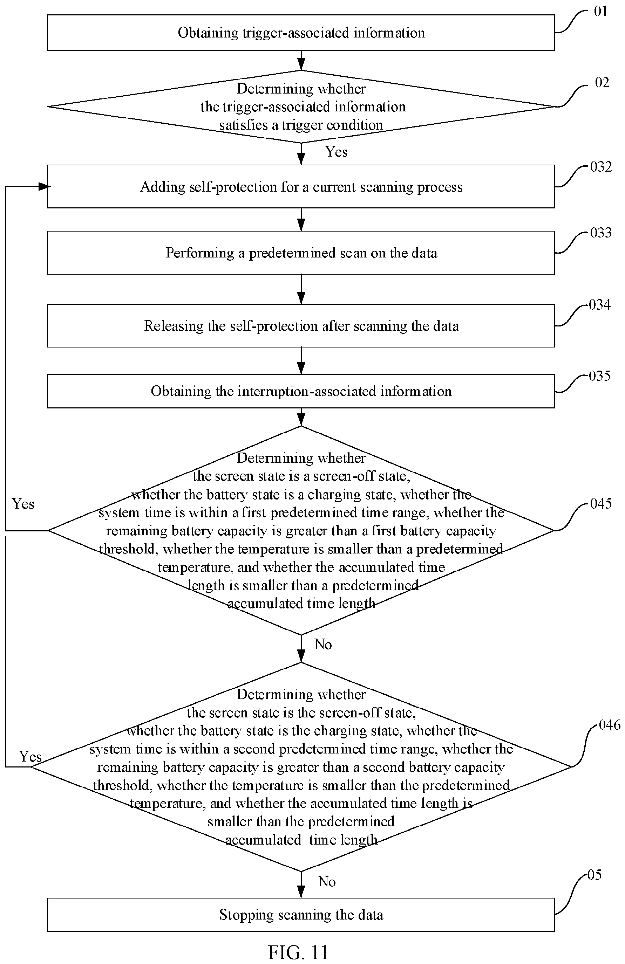

Referring to FIG. 11, in some embodiments, the interruption-associated information includes a screen state of the mobile terminal, a battery state of the mobile terminal, a system time, a remaining battery capacity, a temperature, and an accumulated time length. In response to the screen state being a screen-off state, the battery state being a charging state, the system time being within a first predetermined time range, the remaining battery capacity being greater than a first battery capacity threshold, the temperature being smaller than a predetermined temperature, and the accumulated time length being smaller than a predetermined accumulated time length, the interruption-associated information is determined as not satisfying the stop condition. In response to the screen state being the screen-off state, the battery state being the charging state, the system time being within a second predetermined time range, the remaining battery capacity being greater than a second battery capacity threshold, the temperature being smaller than the predetermined temperature, and the accumulated time length being smaller than the predetermined accumulated time length, the interruption-associated information is determined as not satisfying the stop condition, the first battery capacity threshold being smaller than the second battery capacity threshold. The data scanning method further includes: continuing scanning the data in response to the interruption-associated information not satisfying the stop condition.

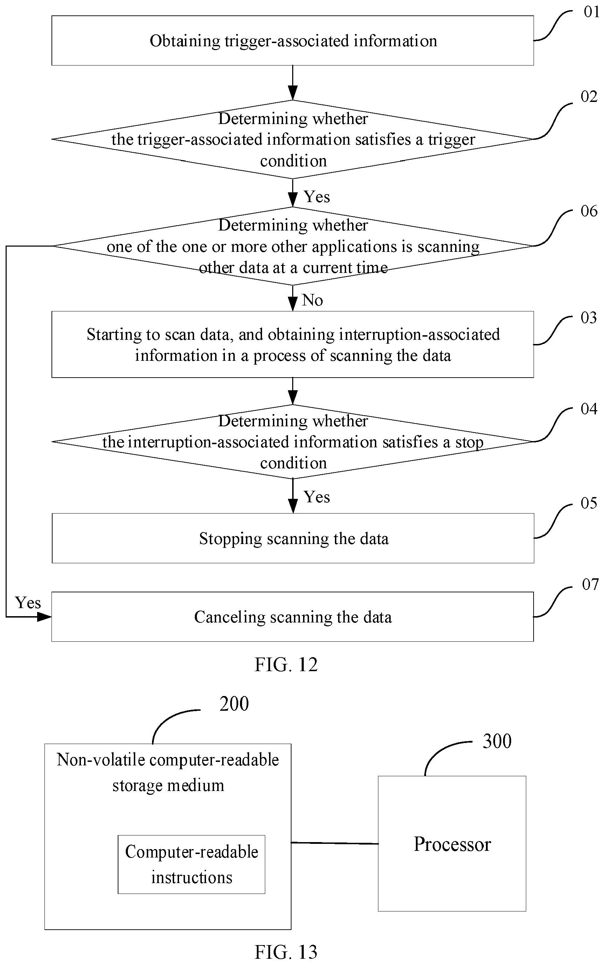

Referring to FIG. 12, in some embodiments, the mobile terminal includes a current application and one or more applications other than the current application. The data scanning method includes: determining whether one of the one or more applications other than the current application is scanning other data at a current time; starting, by the current application, to scan the data in response to none of the one or more applications other than the current application being scanning the other data; and canceling, by the current application, scanning the data in response to one of the one or more applications being scanning the other data.

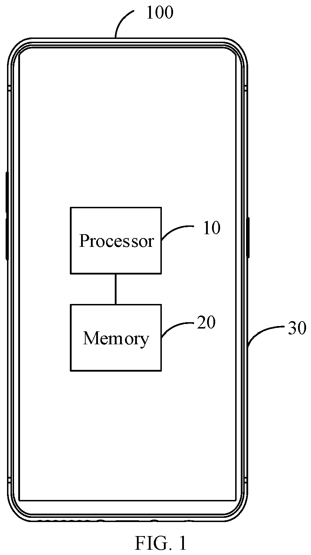

Referring to FIG. 1 and FIG. 2, a mobile terminal 100 according to an embodiment of the present disclosure includes a processor 10. The processor 10 is configured to: obtain trigger-associated information; start to scan data in response to the trigger-associated information satisfying a trigger condition; obtain interruption-associated information in a process of scanning the data; and stop scanning the data in response to the interruption-associated information satisfying a stop condition.

Referring to FIG. 1 and FIG. 3, in some embodiments, the trigger-associated information includes a screen state of the mobile terminal 100 and a battery state of the mobile terminal 100. In response to the screen state being a screen-off state and the battery state being a charging state, the trigger-associated information is determined as satisfying the trigger condition. The processor 10 is further configured to: start to scan the data after a predetermined wait time period, in response to the trigger-associated information satisfying the trigger condition.

Referring to FIG. 1 and FIG. 4, in some embodiments, the trigger-associated information includes a screen state of the mobile terminal 100, a battery state of the mobile terminal 100, and a system time. In response to the screen state being a screen-off state, the battery state being a charging state, and the system time being a predetermined time, the trigger-associated information is determined as satisfying the trigger condition.

Referring to FIG. 1 and FIG. 4, in some embodiments, the predetermined time is randomly set by the mobile terminal 100.

Referring to FIG. 1 and FIG. 5, in some embodiments, the trigger-associated information includes a screen state of the mobile terminal, a battery state of the mobile terminal, a system time, and a scanning time interval. In response to the screen state being a screen-off state, the battery state being a charging state, and an interval between a current system time and a system time at an end of a previous scan being greater than a predetermined time interval, the trigger-associated information is determined as satisfying the trigger condition.

Referring to FIG. 1 and FIG. 6, in some embodiments, the trigger-associated information includes a screen state of the mobile terminal 100, a battery state of the mobile terminal 100, and a scanning interruption factor. In response to the screen state being a screen-off state, the battery state being the charging state, and the scanning interruption factor of a previous scan being that the screen state changes from the screen-off state to a screen-on state, the trigger-associated information is determined as satisfying the trigger condition.

Referring to FIG. 1 and FIG. 7, in some embodiments, the processor 10 is further configured to: add self-protection for a current scanning process; perform a predetermined scan on the data, the predetermined scan including at least one of a scan for video highlight, a scan for person, a scan for tag; release the self-protection after scanning the data; and obtain the interruption-associated information.

In some embodiments, when the predetermined scan includes at least two of the scan for video highlight, the scan for person, and the scan for tag, the processor 20 is further configured to perform a plurality of predetermined scans serially.

Referring to FIG. 1 and FIG. 8, in some embodiments, the interruption-associated information includes a screen state of the mobile terminal 100, a battery state of the mobile terminal 100, a system time, and a remaining battery capacity. In response to the screen state being a screen-off state, the battery state being a charging state, the system time being within a first predetermined time range, and the remaining battery capacity being greater than a first battery capacity threshold, the interruption-associated information is determined as not satisfying the stop condition. In response to the screen state being the screen-off state, the battery state being the charging state, the system time being within a second predetermined time range, and the remaining battery capacity being greater than a second battery capacity threshold, the interruption-associated information is determined as not satisfying the stop condition, the first battery capacity threshold being smaller than the second battery capacity threshold. The processor 10 is further configured to continue scanning the data in response to the interruption-associated information not satisfying the stop condition.

Referring to FIG. 1 and FIG. 9, in some embodiments, the interruption-associated information includes a screen state of the mobile terminal 100, a battery state of the mobile terminal 100, and a temperature. In response to the screen state being a screen-off state, the battery state being a charging state, and the temperature being smaller than a predetermined temperature, the interruption-associated information is determined as not satisfying the stop condition. The processor 10 is further configured to continue scanning the data in response to the interruption-associated information not satisfying the stop condition.

Referring to FIG. 1 and FIG. 10, in some embodiments, the interruption-associated information includes a screen state of the mobile terminal 100, a battery state of the mobile terminal 100, and an accumulated time length. In response to the screen state being a screen-off state, the battery state being a charging state, and the accumulated time length being smaller than a predetermined accumulated time length, the interruption-associated information is determined as not satisfying the stop condition. The processor 10 is further configured to continue scanning the data in response to the interruption-associated information not satisfying the stop condition.

Referring to FIG. 1 and FIG. 11, in some embodiments, the interruption-associated information includes a screen state of the mobile terminal 100, a battery state of the mobile terminal 100, a system time, a remaining battery capacity, a temperature, and an accumulated time length. In response to the screen state being a screen-off state, the battery state being a charging state, the system time being within a first predetermined time range, the remaining battery capacity being greater than a first battery capacity threshold, the temperature being smaller than a predetermined temperature, and the accumulated time length being smaller than a predetermined accumulated time length, the interruption-associated information is determined as not satisfying the stop condition. In response to the screen state being the screen-off state, the battery state being the charging state, the system time being within a second predetermined time range, the remaining battery capacity being greater than a second battery capacity threshold, the temperature being smaller than the predetermined temperature, and the accumulated time length being smaller than the predetermined accumulated time length, the interruption-associated information is determined as not satisfying the stop condition, the first battery capacity threshold being smaller than the second battery capacity threshold. The processor 10 is further configured to continue scanning the data in response to the interruption-associated information not satisfying the stop condition.

Referring to FIG. 1 and FIG. 12, in some embodiments, the mobile terminal 100 includes a current application and one or more applications other than the current application. The processor 10 is further configured to: determine whether one of the one or more other applications is scanning other data at a current time; control the current application to scan the data in response to none of the one or more applications other than the current application being scanning the other data; and control the current application to cancel scanning the data in response to one of the one or more applications other than the current application being scanning the other data.

Referring to FIG. 13, a non-volatile computer-readable storage medium 200 according to an embodiment of the present disclosure includes computer-readable instructions. The computer-readable instructions, when executed by a processor 300, cause the processor 300 to implement the data scanning method described in any one of the foregoing embodiments.

Referring to FIG. 1, the present disclosure provides a mobile terminal 100. The mobile terminal 100 may be a mobile phone, a tablet computer, a notebook computer, a smart wearable device (a smart watch, a smart bracelet, a pair of smart glasses, a smart helmet, etc.), a virtual reality device, or the like. In the present disclosure, the mobile terminal 100 being a mobile phone is taken as an example for description. It can be understood that the specific form of the mobile terminal 100 is not limited to a mobile phone. The mobile terminal 100 includes a housing 30, a processor 10, and a memory 20. The processor 10 is electrically connected to the memory 20, and the memory 20 can store data processed by the processor 10 or store computer-readable instructions that can be executed by the processor 20. The processor 10 and the memory 20 are housed in a housing cavity formed by the housing 30.

Referring to FIG. 2, the present disclosure also provides a data scanning method that can be applied in the mobile terminal 100 of FIG. 1. The data scanning method includes the following operations.

At block 01, trigger-associated information is obtained.

At block 02, it is determined whether the trigger-associated information satisfies a trigger condition.

At block 03, scanning of data is started in response to the trigger-associated information satisfying the trigger condition, and interruption-associated information is obtained in a process of scanning the data.

At block 04, it is determined whether the interruption-associated information satisfies a stop condition.

At block 05, scanning of the data is stopped in response to the interruption-associated information satisfying the stop condition.

Referring to FIG. 1 again, the data scanning method of the present disclosure can be implemented by the mobile terminal 100. The operations at block 01, block 02, block 03, block 04, and block 05 can all be implemented by the processor 10. That is to say, the processor 10 can be configured to obtain the trigger-associated information and determine whether the trigger-associated information satisfies the trigger condition. In response to the trigger-associated information satisfying the trigger condition, the processor 10 starts to scan the data and obtains the interruption-associated information in the process of scanning the data. The processor 10 is further configured to determine whether the interruption-associated information satisfies the stop condition, and stop scanning data in response to the interruption-associated information satisfying the stop condition.

The mobile phone usually has at least one application installed thereon that can be used for photographing, and the application can scan pictures (the specific scanning action is implemented by the processor 10) to obtain information such as a person and/or a tag in the pictures. After the processor 10 obtains information such as a person and/or a tag, the processor 10 can perform post-processing on the pictures based on the information such as the person and the tag, including for example classifying the pictures based on the information such as the person and the tag and making pictures of a same category into a video, etc.; or the processor 10 can analyze a user's preferences based on the information such as the person and the tag, and make a recommendation to the user based on the user's preferences, such as recommending a template for making videos, a background music, and so on.

The processor 10 will implement data scanning in the background when a screen of the mobile phone is on, or when the screen of the mobile phone is off and the mobile phone is in a charging state. However, this scanning scheme takes into account neither a heating problem that may be caused when the mobile phone is charged or is used for implementing scanning nor a stuttering problem that may be caused when the mobile phone is used for implementing scanning. Accordingly, using this scanning scheme to implement the data scanning will seriously affect the user's use experience.

With the data scanning method and mobile terminal 100 according to the embodiments of the present disclosure, the trigger condition and the stop condition are set, data will be scanned only when the trigger-associated information satisfies the trigger condition, and the scanning of data will be stopped when the interruption-associated information satisfies the stop condition. In this way, the heating problem caused by continuous scanning and the stuttering problem caused by the data scanning can be avoided, so that scanning can be performed in a situation where the terminal is in light-weight use by the user and without being perceived by the user, thereby increasing a scanning speed and improving the user experience.

In some embodiments, the trigger-associated information includes at least one of a screen state of the mobile terminal 100, a battery state of the mobile terminal 100, a system time of the mobile terminal 100, a scanning time interval, and a scanning interruption factor.

The screen state includes a screen-on state and a screen-off state. The battery state includes a charging state and a non-charging state. The scanning interruption factor can be the screen state changing from the screen-off state to the screen-on state, a temperature being too high, an accumulated time length of the scanning being too long, a remaining battery capacity of the mobile terminal 100 being too low and so on.

The trigger-associated information may include one or more of the foregoing plurality of types of associated information. For example, the trigger-associated information may include only the screen state, only the battery state, only the system time, only the scanning time interval, or only the scanning interruption factor; or the trigger-associated information may include both the screen state and the battery state; or the trigger-associated information may include the screen state, the battery state, and the system time. Alternatively, the trigger-associated information may include the screen state, the battery state, the system time, and the scanning time interval; or the trigger-associated information may include the screen state, the battery state, the system time, the scanning time interval, and the scanning interruption factor.

Referring to FIG. 3, in an embodiment of the present disclosure, the trigger-associated information includes a screen state and a battery state. The operation at block 02 of determining whether the trigger-associated information satisfies the trigger condition includes the following operations.

At block 021, it is determined whether the screen state is a screen-off state and whether the battery state is a charging state.

In response to the screen state being the screen-off state and the battery state being the charging state (that is, in response to the trigger-associated information satisfying the trigger condition), the operation at block 03 of starting to scan the data in response to the trigger-associated information satisfying the trigger condition and obtaining the interruption-associated information in the process of scanning the data includes the following operation.

At block 031, scanning of the data is started after a predetermined wait time period, in response to the trigger-associated information satisfying the trigger condition; and the interruption-associated information is obtained in the process of scanning the data.

Referring to FIG. 1 again, both the operations at block 021 and block 031 can be implemented by the processor 10. In other words, the processor 10 can be configured to determine whether the screen state is the screen-off state and whether the battery state is the charging state. In response to the screen state being the screen-off state and the battery state being the charging state, the processor 10 starts to scan the data after the predetermined wait time period, and obtains the interruption-associated information in the process of scanning the data.

Specifically, in response to the screen state being a screen-on state, the processor 10 does not perform the data scanning regardless of whether the battery state is a charging state or a non-charging state. It can be understood that when the screen state is the screen-on state, it means that the user is using the mobile terminal 100 and a memory of the mobile terminal 100 has been occupied by an application currently being used by the user. Since scanning of data by the processor 10 will occupy a large amount of memory, if the processor 10 still performs the operation of data scanning in the background while the user is using the mobile terminal 100, the memory of the mobile terminal 100 will be occupied too much, thereby causing the problem of stuttering or unsmoothness of the use of the mobile terminal 100 and even the problem that the application currently being used by the user is forcibly closed by the mobile terminal 100, which will greatly affect the user experience. When the screen state is the screen-on state and the battery state is the non-charging state, scanning of data by the processor 10 in the background will not only cause the problem of the memory being occupied too much, but also speed up power consumption of the mobile terminal 10, which will also affect the user experience. When the screen is the screen-on state and the battery state is the charging state, scanning of data by the processor 10 in the background will not only cause the problem that the memory is occupied too much, but also reduce a charging speed of the mobile terminal 100 and increase heat generated by the terminal 100, thereby causing a temperature of the mobile terminal 100 to be too high and affecting a life span of the mobile terminal 100. In response to the screen state being the screen-off state and the battery state being the non-charging state, the processor 10 does not perform the data scanning. It can be understood that when the screen state is the screen-off state and the battery state is the non-charging state, it means that the user is not using the mobile terminal 100. At this time, scanning of data by the processor 10 will consume power of the mobile terminal 100, causing an illusion for the user that the power will be rapidly consumed even when the mobile terminal is not in use.

In the data scanning method according to the embodiment of the present disclosure, the processor 10 is triggered to perform the operation of scanning the data only when the screen state is the screen-off state and the battery state is the charging state. When the screen state is the screen-off state, it means that the user is not using the mobile terminal 100. At this time, the memory of the mobile terminal 100 is less occupied, and the mobile terminal 100 has enough memory for the processor 10 to perform the operation of scanning the data. In addition, although scanning of data by the processor 10 will consume power, the consumed power can be replenished because the battery is in the charging state, thereby avoiding the illusion for the user that the power will be rapidly consumed even when the mobile terminal 100 is not in use. Furthermore, in the data scanning method of the embodiment of the present disclosure, when the screen state is the screen-off state and the battery state is the charging state, the processor 10 will not scan the data immediately, but will start to scan the data after waiting the predetermined wait time period. Here, a value range of the predetermined wait time period is [3min, 20min]. For example, the predetermined wait time period can be 3min, 5min, 7.5min, 10min, 13min, 16min, 18.4min, 20min, etc. It can be understood that when the trigger-associated information satisfies the trigger condition, the screen may have just switched off at this time. The screen having just switched off indicates that the user has just finished using the mobile terminal 100 and the mobile terminal 100 has not yet entered an inactive state at the time. That is to say, when the user has just finished using the mobile terminal 100, some background applications started during the user's use of the mobile terminal 100 have not been closed and the processor 10 needs to perform a background cleaning action to close these background applications. Then, during a period of time when the screen of the mobile terminal 100 has just switched off, the processor 10 is relatively busy. If the processor 10 starts to scan the data when the screen of the mobile terminal 100 has just switched off, power consumption of the mobile terminal 100 will be increased. In contrast, if the data is scanned after the predetermined wait time period, the power consumption of the mobile terminal 100 can be reduced.

Referring to FIG. 4, in another embodiment of the present disclosure, the trigger-associated information includes a screen state, a battery state, and a system time. The operation at block 02 of determining whether the trigger-associated information satisfies the trigger condition includes the following operation.

At block 022, it is determined whether the screen state is a screen-off state, whether the battery state is a charging state, and whether the system time is a predetermined time.

Referring to FIG. 1 again, the operation at block 022 may be implemented by the processor 10. In other words, the processor 10 can be configured to determine whether the screen state is the screen-off state, whether the battery state is the charging state, and whether the system time is the predetermined time. In response to the screen state being the screen-off state, the battery state being the charging state, and the system time being the predetermined time, the processor 10 determines that the trigger-associated information satisfies the trigger condition. The processor 10 can start to scan data in response to the trigger-associated information being determined as satisfying the trigger condition.

Specifically, the processor 10 can obtain three pieces of information: the screen state, the battery state, and the system time. The system time refers to a system time of the mobile terminal 100. Generally, the system time of the mobile terminal 100 is consistent with a time in a time zone corresponding to a region where the mobile terminal 100 is located. When the system time reaches the predetermined time, if the screen state is the screen-off state and the battery state is the charging state at this time, the processor 10 will start to scan the data. The predetermined time can be any time from 1:00 to 6:00; for example, the predetermined time can be 1:00, 1:15, 1:48, 2:00, 3:00, 4:00, 5 :00, 6:00, etc. It can be understood that any time from 1:00 to 6:00 is in the middle of the night or early morning when the user generally does not use the mobile terminal 100. At such time, the problem that the memory is occupied too much can be avoided when the processor 10 performs the data scanning.

A plurality of applications that can scan data may be installed in the mobile terminal 100, and different applications may correspond to different predetermined times. For example, a predetermined time of application A can be 1:00, and a predetermined time of application B can be 4:00. If the mobile terminal 100 starts to switch off the screen and be charged at 12:00, the processor 10 can start to scan data in the application A at 1:00 and start to scan data in the application B at 4:00. The processor 10 staggers the scanning of data by the application A and the scanning of data by the application B, so as to avoid problems such as serious heat generation and fast power consumption of the mobile terminal 100 caused by scanning too much data at the same time.

Different mobile terminals 100 can set different predetermined times. For example, the predetermined time of each mobile terminal 100 can be randomly generated by the mobile terminal 100, so that the predetermined times corresponding to most mobile terminals 100 can be different. It can be understood that information generated by the processor 10 after scanning data will be transmitted to a server corresponding to an application storing the data. If processors 10 of a plurality of mobile terminals 100 start to scan at a same predetermined time, the plurality of mobile terminals 100 will upload information obtained after scanning (i.e. scan results) to the server at the same time, thereby causing the problem that bandwidth load of the server is too heavy which in turn affects transmission of information. In the data scanning method according to the embodiment of the present disclosure, the predetermined times of the plurality of mobile terminals 100 are randomly configured so that the predetermined times of the plurality of mobile terminals 100 are different, which can reduce the bandwidth load of the server and ensure the successful transmission of information.

Referring to FIG. 5, in another embodiment of the present disclosure, the trigger-associated information includes a screen state, a battery state, a system time, and a scanning time interval. The operation at block 02 of determining whether the trigger-associated information satisfies the trigger condition includes the following operation.

At block 023, it is determined whether the screen state is a screen-off state, whether the battery state is a charging state, and whether an interval between a current system time and a system time at an end of a previous scan is greater than a predetermined time interval.

The operation at block 023 may be implemented by the processor 10. In other words, the processor 10 can be configured to determine whether the screen state is the screen-off state, whether the battery state is the charging state, and whether the interval between the current system time and the system time at the end of the previous scan is greater than the predetermined time interval. In response to the screen state being the screen-off state, the battery state being the charging state, and the interval between the current system time and the system time at the end of the previous scan being greater than the predetermined time interval, the processor 10 determines that the trigger-associated information satisfies the trigger condition. A value range of the predetermined time interval can be 1 day to 7 days; for example, the predetermined time interval can be 1 day, 2 days, 2.5 days, 3 days, 4 days, 5 days, 6 days, 7 days, etc. The processor 10 can start to scan the data in response to the processor 10 determining that the trigger-associated information satisfies the trigger condition.

Specifically, the processor 10 may obtain the screen state, the battery state, the current system time, and the system time at the end of the previous scan, and then determine whether to scan the data based on these four pieces of trigger-associated information. For example, the processor 10 may first determine whether the screen state is the screen-off state; when the screen state is not the screen-off state, the processor 10 does not perform the determination of the battery state and the time interval between two scans; and when the screen state is the screen-off state, the processor 10 then determines whether the battery state is the charging state. When the current battery state is the non-charging state, the processor 10 does not perform the determination of the scanning time interval; when the battery state is the charging state, the processor 10 calculates the interval between the current system time and the system time at the end of the previous scan; when the interval is greater than the predetermined time interval, the processor 10 starts to scan the data; and when the interval is smaller than or equal to the predetermined time, the processor 10 does not scan the data. Of course, the order of the determination of the screen state, the battery state, and the interval between two scans is not limited; alternatively, the processor 10 may also perform simultaneous determination of the screen state, the battery state, and the interval between two scans, etc.

In a case where data has not been scanned for the predetermined time interval, when the mobile terminal 100 enters the screen-off state and the charging state, the processor 10 immediately starts to scan the data, the scan results can be quickly obtained, and the scan results can also be quickly transmitted to the server.

Referring to FIG. 6, in another embodiment of the present disclosure, the trigger-associated information includes a screen state, a battery state, and an interruption-associated factor. The operation at block 02 of determining whether the trigger-associated information satisfies the trigger condition includes the following operation.

At block 024, it is determined whether the screen state is the screen-off state, whether the battery state is the charging state, and whether the scan interruption factor of a previous scan is that the screen state changes from the screen-off state to a screen-on state.

Referring to FIG. 1 again, the operation at block 024 may be implemented by the processor 10. In other words, the processor 10 can be configured to determine whether the screen state is the screen-off state, whether the battery state is the charging state, and whether the scan interruption factor of the previous scan is that the screen state changes from the screen-off state to the screen-on state. In response to the screen state being the screen-off state, the battery state being the charging state, and the scan interruption factor of the previous scan being that the screen state changes from the screen-off state to the screen-on state, the processor 10 determines that the trigger-associated information satisfies the trigger condition. The processor 10 can start to scan the data in response to the processor 10 determining that the trigger associated information satisfies the trigger condition.

Specifically, the processor 10 will record a factor that causes a termination of a scan (i.e., the scanning interruption factor) each time the scan is terminated. The scanning interruption factor may include one or more of a temperature, a remaining battery capacity, an accumulated time length of scanning, a change of the screen state, a change of the battery state, or data scanning having been completed. In the embodiment of the present disclosure, when the processor 10 determines that the screen state is the screen-off state and the battery state is the charging state, the processor 10 will further determine whether the scan interruption factor of the previous scan is that the screen state changes from the screen-off state to the screen-on state. If no, the processor 10 can start to scan the data after a predetermined wait time period; and if yes, the processor 10 immediately starts to scan the data. It can be understood that if the scanning interruption factor of the previous scan is that the screen state changes from the screen-off state to the screen-on state, it means that a scanning process was interrupted by the user's use of the mobile terminal 100, and at this time, a situation may happen where the scanning is interrupted when only a small part of the data has been scanned. When the screen state is determined as the screen-off state, the battery state is determined as the charging state, and the scan interruption factor of the previous scan is determined as that the screen state changes from the screen-off state to the screen-on state, the processor 10 immediately starts to scan the data, the remaining data can be scanned as soon as possible, and the scan result can be fed back to the server faster.

It should be noted that, in the data scanning method according to the embodiment of the present disclosure, as long as the trigger-associated information satisfies any one of the four trigger conditions in FIGS. 3 to 6, the processor 10 will scan the data. When the trigger-associated information does not satisfy any one of the four trigger conditions shown in FIGS. 3 to 6, the processor 10 will not scan the data.

Referring to FIG. 7, in some embodiments, the operation at block 03 of starting to scan the data in response to the trigger-associated information satisfying the trigger condition, and obtaining the interruption-associated information in the process of scanning the data, includes the following operations.

At block 032, self-protection is added for a current scanning process.

At block 033, a predetermined scan is performed on the data.

At block 034, the self-protection is released after scanning the data.

At block 035, the interruption-associated information is obtained.

Referring to FIG. 1 again, all the operations at block 032, block 033, block 034, and block 035 can be implemented by the processor 10. In other words, the processor 10 can be further configured to add the self-protection for the current scanning process, perform the predetermined scan on the data, release the self-protection after scanning the data, and obtain the interruption-associated information.

In the data scanning method of the present disclosure, the data may include pictures and videos. The picture may be a static picture or a motion picture, such as a Graphic Interchange Format (GIF) motion picture.

The predetermined scan includes at least one of a scan for video highlight, a scan for person, and a scan for tag. For example, the predetermined scan may only include any one of the scan for video highlight, the scan for person or the scan for tag; or the predetermined scan can include both the scan for video highlight and the scan for person; or the predetermined scan can include both the scan for video highlight and the scan for tag; or the predetermined scan can include both the scan for person and the scan for tag; or the predetermined scan can include the scan for video highlight, the scan for person, and the scan for tag. The scan for video highlight refers to identifying a highlight in a video. The scan for person refers to identifying a person in a video or a picture. The scan for tag includes identifying a scene, an object, etc. in a video or a picture.

The processor 10 may divide the data into one batch or a plurality of batches based on the amount of the data. Specifically, when the amount of the data is relatively small, the processor 10 takes all the data as one batch of data; when the amount of the data is relatively large, the processor 10 divides all the data into a plurality of batches of data. When the processor 10 performs the predetermined scan on the data, only one batch of data is scanned at a time. For example, 50 pictures can be taken as one batch of data, a single video with a relatively short duration can be taken as one batch of data, a video with a relatively long duration can be divided into a plurality of segments and each segment can be taken as one batch of data, and so on.

Specifically, in response to the trigger-associated information satisfying the trigger condition, the processor 10 starts to perform the operation of scanning the data. The processor 10 first adds the self-protection for the current scanning process to be performed (it can also be understood as adding the self-protection for an application which is currently to perform the scanning action). If the data to be scanned in the current scanning process only includes the video, the processor 10 may set a self-protection of a first protection duration for the current scanning process. A value range of the first protection duration may be 20min to 40min; for example, the first protection duration can be 20min, 23min, 25min, 27.8min, 30min, 32min, 36min, 39min, 40min, etc. If the data to be scanned by the current scanning process only includes the picture, the processor 10 may set a self-protection of a second protection duration for the current scanning process. A value range of the second protection duration may be 5min to 20min; for example, the second protection duration can be 5min, 8min, 10min, 12min, 14.5min, 15min, 17min, 19min, 20min, etc. If the data to be scanned in the current scanning process includes both the video and the picture, the processor 10 can set a self-protection of a third protection duration for the current scanning process. A value range of the third protection duration may be 25min to 60min; for example, the third protection period can be 25min, 30min, 35min, 40min, 45.8min, 50min, 53min, 58min, 60min, etc. After the self-protection is added, the processor 10 invokes a third-party software development kit (SDK) to perform the predetermined scan on the data to be currently scanned. The predetermined scan includes at least one of the scan for video highlight, the scan for person, and the scan for tag. For example, the predetermined scan includes only the scan for highlight, only the scan for person, or only the scan for tag; or the predetermined scan includes both the scan for highlight and the scan for person; or the predetermined scan includes the scan for highlight, the scan for person, and the scan for tag. When there are a plurality of types of predetermined scans (two or more types of scans), the processor 10 performing the predetermined scan on the data specifically includes: the processor 10 performing the plurality of types of predetermined scans serially. For example, assuming that the predetermined scan includes the scan for highlight, the scan for person, and the scan for tag, the processor 10 can perform three types of predetermined scans serially. The performing order of the three predetermined scans can be arbitrary, and will not be limited herein. Of course, when the data currently to be scanned does not include the video, the processor 10 only needs to perform the scan for person and the scan for tag. After performing the three predetermined scans, the processor 10 releases the self-protection for the current scanning process. Subsequently, the processor 10 obtains the interruption-associated information. If the interruption-associated information does not satisfy the stop condition, the processor 10 will continue scanning the next batch of data, and the processor 10 will again perform the operations of adding the self-protection for the scanning process, performing the predetermined scan on the data, releasing the self-protection after scanning the data, and obtaining the interruption-associated information. This cycle repeats until the processor 10 stops scanning in response to the interruption-associated information satisfying the stop condition or in response to the interruption-associated information not satisfying the stop condition but all batches of data have been scanned. Stopping scanning the data refers to terminating the triggered data scanning; the processor 10 will not start a new data scanning again until the trigger-associated information satisfies the trigger condition again. If the data has not been scanned completely (for example, only 3 batches of data have been scanned and 2 batches of data have not been scanned), when the processor 10 scans the data next time, the processor 10 will not scan the 3 batches of data that have been scanned, and will only scan the 2 batches of data that has not yet been scanned.

It can be understood that since the processor 10 will occupy a large amount of memory in the process of scanning the data in the background, there is a risk that the scanning process will be forcibly closed, so it is necessary to add the self-protection function to the current scanning process. In this way, it can be ensured that in the process of the processor 10 scanning a batch of data, the scanning process will not be forcibly closed, and the continuity of scanning will not be interrupted. By setting the self-protection duration based on the type of data, the scanning process can be flexibly managed and controlled to satisfy processing needs of various types of data. In addition, scanning the data in batches can avoid too large amount of data that needs to be scanned at a time, and hence failure to respond to interruptions in a timely manner as well as problems such as that the temperature of the mobile terminal 100 is too high and the battery capacity of the mobile terminal 100 is too low.

In some embodiments, the interruption-associated information includes at least one of a screen state of the mobile terminal 100, a battery state of the mobile terminal 100, a system time of the mobile terminal 100, a remaining battery capacity of the mobile terminal 100, a temperature of the mobile terminal 100, and an accumulated time length of scanning. For example, the interruption-associated information may only include any one of the screen state, the battery state, the system time, the remaining battery capacity, the temperature, or the accumulated time length of scanning; or the interruption-associated information may include both the screen state and the battery state; or the interruption-associated information can include both the remaining battery capacity and the temperature; or the interruption-associated information can include the screen state, the battery state, and the temperature; or the interruption-associated information can include the screen state, the battery state, the system time, and the remaining battery capacity; or the interruption-associated information can include the screen state, the battery state, the system time, the remaining battery capacity, and the temperature. Alternatively, the interruption-associated information may include the screen state, the battery state, the system time, the remaining battery capacity, the temperature, and the accumulated time length of scanning.

Referring to FIG. 8, in an embodiment of the present disclosure, the interruption-associated information includes a screen state, a battery state, a system time, and a remaining battery capacity. The operation at block 04 of determining whether the interruption-associated information satisfies the stop condition includes the following operations.

At block 041, it is determined whether the screen state is a screen-off state, whether the battery state is a charging state, whether the system time is within a first predetermined time range, and whether the remaining battery capacity is greater than a first battery capacity threshold.

If yes (that is, the screen state is the screen-off state, the battery state is the charging state, the system time is within the first predetermined time range, and the remaining battery capacity is greater than the first battery capacity threshold), then scanning of the data is continued; and if no, then the operation at block 04 of determining whether the interruption-associated information satisfies the stop condition further includes the following operation.

At block 042, it is determined whether the screen state is the screen-off state, whether the battery state is the charging state, whether the system time is within a second predetermined time range, and whether the remaining battery capacity is greater than a second battery capacity threshold. The second battery capacity threshold is greater than the first battery capacity threshold.

If yes (that is, the screen state is the screen-off state, the battery state is the charging state, the system time is within the second predetermined time range, and the remaining battery capacity is greater than the second battery capacity threshold), then scanning of the data is continued; and if no, scanning of the data is stopped.

Referring to FIG. 1 again, both the operations at block 041 and block 042 can be implemented by the processor 10. In other words, the processor 10 can be configured to determine whether the screen state is the screen-off state, whether the battery state is the charging state, whether the system time is within the first predetermined time range, and whether the remaining battery capacity is greater than the first battery capacity threshold. When the screen state is the screen-off state, the battery state is the charging state, the system time is within the first predetermined time range, and the remaining battery capacity is greater than the first battery capacity threshold, the processor 10 continues scanning the data. The processor 10 continuing scanning the data means that the processor 10 performs the operation of scanning a next batch of data; the processor 10 will sequentially execute the operations of adding the self-protection for the scanning process, performing the predetermined scan on the data, releasing the self-protection after scanning the data, and determining once more whether the interruption-associated information satisfies the stop condition after the self-protection is released; and the cycle repeats. If the interruption-associated information does not satisfy the stop condition, the processor 10 will further determine whether the screen state is the screen-off state, whether the battery state is the charging state, whether the system time is within the second predetermined time range, and whether the remaining battery capacity is greater than the second battery capacity threshold. If the screen state is the screen-off state, the battery state is the charging state, the system time is within the second predetermined time range, and the remaining battery capacity is greater than the second battery capacity threshold, the processor 10 will continue scanning the data; otherwise, the processor 10 will stop scanning the data.

The first predetermined time range may be [0:00, 8:00], and the first predetermined time range may be understood as a time period in the night. A value range of the first battery capacity threshold may be 20% to 35%; for example, the first battery capacity threshold can be 20%, 25%, 28.9%, 30%, 32%, 34%, 35%, etc. The second predetermined time range can be (8:00, 24:00), and the second predetermined time range can be understood as a time period not in the night. A value range of the second battery capacity threshold can be 40% to 55%; for example, the second battery capacity threshold can be 40%, 45%, 48.9%, 50%, 51%, 53%, 55%, etc.

Specifically, after the processor 10 finishes scanning a batch of data, the processor 10 does not immediately perform scanning of the next batch of data, but first determine whether the screen state is the screen-off state, whether the battery state is the charging state, whether the system time is within the first predetermined time range, and whether the remaining battery capacity is greater than the first battery capacity threshold. If the screen state is the screen-off state, the battery state is the charging state, the system time is within the first predetermined time range, and the remaining battery capacity is greater than the first battery capacity threshold, the processor 10 determines that the interruption-associated information does not satisfy the stop condition and the processor 10 will scan the next batch of data. The interruption-associated information satisfying the stop condition includes: (1) the screen state is the screen-on state; (2) the battery state is in the non-charging state; (3) the system time is within the first predetermined time range but the remaining battery capacity is smaller than or equal to the first battery capacity threshold. When the interruption-associated information satisfies the stop condition, the processor 10 determines whether the screen state is the screen-off state, whether the battery state is the charging state, whether the system time is within the second predetermined time range, and whether the remaining battery capacity is greater than the second battery capacity threshold. If the screen state is the screen-off state, the battery state is the charging state, the system time is within the second predetermined time range, and the remaining battery capacity is greater than the second battery capacity threshold, the processor 10 determines that the interruption-associated information does not satisfy the stop condition, and the processor 10 will scan the next batch of data. The interruption-associated information satisfying the stop condition includes: (1) the screen state is the screen-on state, and the battery state is the non-charging state; (2) the system time is within the second predetermined time range but the remaining battery capacity is smaller than or equal to the second battery capacity threshold. In response to the interruption-associated information satisfies the stop condition, the processor 10 stops scanning data.

It can be understood that if the screen is on in the scanning process, it indicates that the user is about to use the mobile terminal 100. If the data is still scanned at this time, it is likely to cause the operation of mobile terminal 100 to stutter. When charging of the mobile terminal 100 is stopped in the scanning process, if the data is still scanned at this time, it will lead to an illusion for the user that the battery of the mobile terminal 100 is damaged thereby causing a large amount of power to be consumed even when the mobile terminal 100 is not in use. When the system time is within the first predetermined time range, but the remaining battery capacity is smaller than or equal to the first battery capacity threshold, if the data is still scanned at this time, it may cause the problem that the battery cannot be fully charged after a long time. When the system time is within the second predetermined time range, but the remaining battery capacity is smaller than or equal to the second battery capacity threshold, if the data is still scanned at this time, it may cause the problem that the battery may not be fully charged quickly thereby affecting the user's use of the mobile terminal.

In the data scanning method according to the embodiment of the present disclosure, four types of interruption-associated information - the screen state, the battery state, the system time, and the remaining battery capacity - are set as the basis for determining whether to stop scanning, so that scanning can be performed without affecting the user's use of the mobile terminal, and the scanning efficiency and the user experience can be improved. In addition, considering that the user uses the mobile terminal 100 more during the daytime and has higher requirements for the charging speed, in the data scanning method of the embodiment of the present disclosure, different battery capacity thresholds are set for different time periods, and the second battery capacity threshold for the daytime is greater than the first battery capacity threshold for the nighttime, which can further improve the user experience.

Of course, in some embodiments, the processor 10 may perform the determination at block 042 first and then perform the determination at block 041, which is not limited here.

Referring to FIG. 9, in another example, the interruption-associated information includes a screen state, a battery state, and a temperature. The operation at block 04 of determining whether the interruption-associated information satisfies the stop condition includes the following operation.

At block 043, it is determined whether the screen state is a screen-off state, the battery state is a charging state, and whether the temperature is smaller than a predetermined temperature.

Referring to FIG. 1 again, the operation at block 043 may be implemented by the processor 10. In other words, the processor 10 can be configured to determine whether the screen state is the screen-off state, whether the battery state is the charging state, and whether the temperature is smaller than the predetermined temperature. In response to the screen state being the screen-off state, the battery state being the charging state, and the temperature being smaller than the predetermined temperature, the processor 10 determines that the interruption-associated information does not satisfy the stop condition, and the processor 10 continues scanning the next batch of data.

Specifically, after the processor 10 finishes scanning a batch of data, the processor 10 does not immediately perform scanning of the next batch of data, but first determines whether the screen state is the screen-off state, whether the battery state is the charging state, and whether the temperature is smaller than the predetermined temperature. If the screen state is the screen-off state, the battery state is the charging state, and the temperature is smaller than the predetermined temperature, the processor 10 determines that the interruption-associated information does not satisfy the stop condition, and the processor 10 scans the next batch of data. The interruption-associated information satisfying the stop condition includes: (1) the screen state is the screen-on state; (2) the battery state is the non-charging state; (3) the temperature is greater than or equal to the predetermined temperature. In response to the interruption-associated information satisfying the stop condition, the processor 10 stops scanning data.

It can be understood that if the screen is on in the scanning process, it indicates that the user is about to use the mobile terminal 100. If the data is still scanned at this time, it is likely to cause the operation of the mobile terminal 100 to stutter. When charging of the mobile terminal 100 is stopped in the scanning process, if the data is still scanned at this time, it will lead to an illusion for the user that the battery of the mobile terminal 100 is damaged thereby causing a large amount of power to be consumed even when the mobile terminal 100 is not in use. When the temperature exceeds the predetermined temperature, if the data is still scanned at this time, the heat generated by the mobile terminal 100 will be increased thereby affecting the life span of the mobile terminal 100.

In the data scanning method according to the embodiment of the present disclosure, three types of interruption-associated information - the screen state, the battery state, and the temperature - are set as the basis for determining whether to stop scanning, so that scanning can be performed without affecting the user's use of the mobile terminal, and the scanning efficiency and user experience can be improved.

Referring to FIG. 10, in another example, the interruption-associated information includes a screen state, a battery state, and an accumulated time length. The operation at block 04 of determining whether the interruption-associated information satisfies the stop condition includes the following operation.

At block 044, it is determined whether the screen state is a screen-off state, whether the battery state is a charging state, and whether the accumulated time length is smaller than a predetermined accumulated time length.

Referring to FIG. 1 again, the operation at block 044 can be implemented by the processor 10. In other words, the processor 10 can be configured to determine whether the screen state is the screen-off state, whether the battery state is the charging state, and whether the accumulated time length is smaller than the predetermined accumulated time length. In response to the screen state being the screen-off state, the battery state being the charging state, and the accumulated time length being smaller than the predetermined accumulated time length, the processor 10 determines that the interruption-associated information does not satisfy the stop condition, and the processor 10 continues scanning the next batch of data.

Specifically, after the processor 10 finishes scanning a batch of data, the processor 10 does not immediately perform scanning of the next batch of data, but first determines whether the screen state is the screen-off state, whether the battery state is the charging state, and whether the accumulated time length is smaller than the predetermined accumulated time length. If the screen state is the screen-off state, the battery state is the charging state, and the accumulated time length is smaller than the predetermined accumulated time length, the processor 10 determines that the interruption-associated information does not satisfy the stop condition, and the processor 10 scans the next batch of data. The interruption-associated information satisfying the stop condition includes: (1) the screen state is the screen-on state; (2) the battery state is the non-charging state; (3) the accumulated time length is greater than or equal to the predetermined accumulated time length. In response to the interruption-associated information satisfying the stop condition, the processor 10 stops scanning data.

It can be understood that if the screen is on in the scanning process, it indicates that the user is about to use the mobile terminal 100. If the data is still scanned at this time, it is likely to cause the operation of the mobile terminal 100 to stutter. When charging of the mobile terminal 100 is stopped in the scanning process, if the data is still scanned at this time, it will lead to an illusion for the user that the battery of the mobile terminal 100 is damaged thereby causing a large amount of power to be consumed even when the mobile terminal 100 is not in use. When the accumulated time length exceeds the predetermined accumulated time length, if the data is still scanned at this time, a lot of power and system resources will be consumed.

In the data scanning method according to the embodiment of the present disclosure, three types of interruption-associated information - the screen state, the battery state, and the accumulated time length - are set as the basis for determining whether to stop scanning, so that scanning can be performed without affecting the user' use of the mobile terminal, and the scanning efficiency and the user experience can be improved.

Referring to FIG. 11, in still another embodiment, the interruption-associated information includes a screen state, a battery state, a system time, a remaining battery capacity, a temperature, and an accumulated time length of scanning.

The operation at block 04 of determining whether the interruption-associated information satisfies the stop condition includes the following operations.

At block 045, it is determined whether the screen state is a screen-off state, whether the battery state is a charging state, whether the system time is within a first predetermined time range, whether the remaining battery capacity is greater than a first battery capacity threshold, whether the temperature is smaller than a predetermined temperature, and whether the accumulated time length is smaller than a predetermined accumulated time length.

If yes (that is, the screen state is the screen-off state, the battery state is the charging state, the system time is within the first predetermined time range, the remaining battery capacity is greater than the first battery capacity threshold, the temperature is smaller than the predetermined temperature, and the accumulated time length is smaller than the predetermined accumulated time length), then scanning of the data is continued. If no, the operation at block 04 of determining whether the interruption-associated information satisfies the stop condition further includes the following operation.

At block 046, it is determined whether the screen state is the screen-off state, whether the battery state is the charging state, whether the system time is within a second predetermined time range, whether the remaining battery capacity is greater than a second battery capacity threshold, whether the temperature is smaller than the predetermined temperature, and whether the accumulated time length is smaller than the predetermined accumulated time length.

If yes (that is, the screen state is the screen-off state, the battery state is the charging state, the system time is within the second predetermined time range, the remaining battery capacity is greater than the second battery capacity threshold, the temperature is smaller than the predetermined temperature, and the accumulated time length is smaller than the predetermined accumulated time length), then scanning of the data is continued; and if no, scanning the data is stopped.

Referring to FIG. 1 again, both the operations at block 045 and block 046 can be implemented by the processor 10. In other words, the processor 10 can be configured to determine whether the screen state is the screen-off state, whether the battery state is the charging state, whether the system time is within the first predetermined time range, whether the remaining battery capacity is greater than the first battery capacity threshold, whether the temperature is smaller than the predetermined temperature, and whether the accumulated time length is smaller than the predetermined accumulated time length. When the screen state is screen-off state, the battery state is the charging state, the system time is within the first predetermined time range, the remaining battery capacity is greater than the first battery capacity threshold, the temperature is smaller than the predetermined temperature, and the accumulated time length is smaller than the predetermined accumulated time length, the processor 10 continues scanning the data. If the interruption-associated information does not satisfy the stop condition, the processor 10 will further determine whether the screen state is the screen-off state, whether the battery state is the charging state, whether the system time is within the second predetermined time range, whether the remaining battery capacity is greater than the second battery capacity threshold, whether the temperature is smaller than the predetermined temperature, and whether the accumulated time length is smaller than the predetermined accumulated time length. If the screen state is the screen-off state, the battery state is the charging state, the system time is within the second predetermined time range, the remaining battery capacity is greater than the second battery capacity threshold, the temperature is smaller than the predetermined temperature, and the accumulated time length is smaller than the predetermined accumulated time length, then the processor 10 will continue scanning the data; and otherwise, the processor 10 stops scanning the data.

The first battery capacity threshold is smaller than the second battery capacity threshold, and the first predetermined time range, the second predetermined time range, the first battery capacity threshold, and the second battery capacity threshold are the same as those in the embodiment shown in FIG. 8 and will not be repeated here.

Specifically, after the processor 10 finishes scanning a batch of data, the processor 10 does not immediately perform scanning of the next batch of data, but first determines whether the screen state is the screen-off state, whether the battery state is the charging state, whether the system time is within the first predetermined time range, whether the remaining battery capacity is greater than the first battery capacity threshold, whether the temperature is smaller than the predetermined temperature, and whether the accumulated time length is smaller than the predetermined accumulated time length. If the screen state is the screen-off state, the battery state is the charging state, the system time is within the first predetermined time range, the remaining battery capacity is greater than the first battery capacity threshold, the temperature is smaller than the predetermined temperature, and the accumulated time length is smaller than the predetermined accumulated time length, the processor 10 determines that the interruption-associated information does not satisfy the stop condition, and the processor 10 scans the next batch of data. The interruption-associated information satisfying the stop condition includes: (1) the screen state is the screen-on state; (2) the battery state is the non-charging state; (3) the temperature is greater than or equal to the predetermined temperature; (4) the accumulated time length is greater than or equal to the predetermined accumulated time length; (5) the system time is within the first predetermined time range but the remaining battery capacity is smaller than or equal to the first battery capacity threshold. When the interruption-associated information satisfies the stop condition, the processor 10 will further determine whether the screen state is the screen-off state, whether the battery state is the charging state, whether the system time is within the second predetermined time range, whether the remaining battery capacity is greater than the second battery capacity threshold, whether the temperature is smaller than the predetermined temperature, and whether the accumulated time length is smaller than the predetermined accumulated time length. If the screen state is the screen-off state, the battery state is the charging state, the system time is within the second predetermined time range, the remaining battery capacity is greater than the second battery capacity threshold, the temperature is smaller than the predetermined temperature, and the accumulated time length is smaller than the predetermined accumulated time length, the processor 10 determined that the interruption-associated information does not satisfy the stop condition and the processor 10 will scan the next batch of data. The interruption-associated information satisfying the stop condition includes: (1) the screen state is the screen-on state; (2) the battery state is the non-charging state; 3) the temperature is greater than or equal to the predetermined temperature; (4) the accumulated time length is greater than or equal to the predetermined accumulated time length; (5) the system time is within the second predetermined time range but the remaining battery capacity is smaller than or equal to the second battery capacity threshold. In response to the interruption-associated information satisfying the stop condition, the processor 10 stops scanning the data.

In the data scanning method according to the embodiment of the present disclosure, six types of interruption-associated information - the screen state, the battery state, the system time, the remaining battery capacity, the temperature, and the accumulated time length of scanning - are set as the basis for determining whether to stop scanning, so that scanning can be performed without affecting the user's use of the mobile terminal, and the scanning efficiency and the user experience can be improved. In addition, considering that the user uses the mobile terminal 100 more during the daytime and has higher requirements for the charging speed, in the data scanning method of the embodiments of the present disclosure, different battery capacity thresholds are set for different time periods, and the second battery capacity threshold for the daytime is greater than the first battery capacity threshold for the nighttime, which can further improve the user experience.

Of course, in some embodiments, the processor 10 may also perform the determination at block 046 first and then perform the determination at block 045, which is not limited herein.

Referring to FIG. 12, in some embodiments, the mobile terminal 100 includes a current application and one or more applications other than the current application, and the data scanning method further includes the following operations.

At block 06, it is determined whether one of the one or more other applications is scanning other data at a current time.

Scanning of the data is started by the current application in response to none of the one or more applications other than the current application being scanning the other data.

At block 07, scanning of the data is canceled by the current application in response to one of the one or more applications other than the current application being scanning the data.

Referring to FIG. 1 again, both the operations at block 06 and block 07 can be implemented by the processor 10. In other words, the processor 10 can be further configured to determine whether one of the one or more other applications is scanning other data at the current time, the processor 10 controls the current application to start to scan the data in response to none of the one or more applications other than the current application being scanning the other data, and the processor 10 controls the current application to cancel scanning the data.

Specifically, when the trigger-associated information satisfies the trigger condition, the processor 10 will further determine whether one of the one or more other applications is scanning other data at the current time. For example, when an application is scanning the data, the application will be added to a system whitelist, and a package name of the application will be in a protected state at the time. When the trigger-associated information satisfies the trigger condition, the current application needs to obtain protection states of package names of the one or more applications other than the current application (the specific operation is performed by the processor 10). If the package name of any one of the one or more applications other than the current application is in the protected state, the current application cancels scanning the data. If the package name of none of the one or more applications other than the current application is in the protected state, the current application can start to scan the data. It should be noted that the one or more applications other than the current application refer to applications that need to perform a data scanning operation, rather than all applications in the mobile terminal 100.

It can be understood that due to high power consumption of data scanning, much of the memory will be occupied. If a plurality of applications perform data scanning simultaneously in the background, more memory will be inevitably occupied and more power will be consumed, resulting in lower performance of the mobile terminal 100 and decreased scanning efficiency.

In the data scanning method according to the embodiment of the present disclosure, before some application triggers scanning in the background, it is determined whether one of the one or more applications other than the application is scanning in the background. If yes, the scanning in the background triggered by the application this time is canceled and will be performed when triggered next time, so as to ensure that only one application scans in the background at any time. In this way, not too much memory will be occupied, and at the same time scanning efficiency will be improved.

In some embodiments, data and scan results can be shared between different applications. For example, application A can share its data and scan results with application B, and application B can share its data and scan results with application A. In this way, respective applications can perform subsequent processing based on more data and more scan results. Of course, in order to ensure the privacy and security of data, data sharing between different applications requires a user consent.

Referring to FIG. 13, the present disclosure also provides a non-volatile computer-readable storage medium 200 having computer-readable instructions stored thereon. The computer-readable instructions, when executed by a processor 300, cause the processor 300 to implement the data scanning method described in any one of the foregoing embodiments.

With reference to FIG. 2 along with FIG. 13, for example, the computer-readable instructions, when executed by the processor 300, cause the processor 300 to implement the following operations.

At block 01, trigger-associated information is obtained.

At block 02, it is determined whether the trigger-associated information satisfies a trigger condition.

At block 03, scanning of data is started in response to the trigger-associated information satisfying the trigger condition, and interruption-associated information is obtained in the process of scanning the data.

At block 04, it is determined whether the interruption-associated information satisfies a stop condition.

At block 05, scanning of the data is stopped in response to the interruption-associated information satisfying the stop condition.

With reference to FIG. 7 along with FIG. 13, for example, the computer-readable instructions, when executed by the processor 300, cause the processor 300 to implement the following operations.

At block 032, self-protection is added for a current scanning process.

At block 033, a predetermined scan is performed on the data.

At block 034, the self-protection is released after scanning the data.

At block 035, the interruption-associated information is obtained.

In the description of the specification, reference to terms "one embodiment", "some embodiments", "an exemplary embodiment", "an example", "a specific example" or "some examples" etc. means that a specific feature, structure, material, or characteristic described in connection with the embodiment or example is included in at least one embodiment or example of the present disclosure. In this specification, the exemplary expressions of the above-mentioned terms do not necessarily refer to the same embodiment or example. Moreover, the described specific features, structures, materials or characteristics can be combined in an appropriate manner in any one or more embodiments or examples. In addition, those skilled in the art can combine different embodiments or examples and features of the different embodiments or examples described in the specification if no conflict is incurred.

Any process or method described in a flowchart or described in other ways herein can be understood as including one or more modules, segments or parts of codes of executable instructions for implementing specific logical functions or steps in the process, and the scope of the embodiments of the present disclosure includes additional implementations, in which involved functions may be executed in an order different from the depicted or discussed order, including in a substantially simultaneous manner or in a reverse order. These should be understood by those skilled in the art to which the embodiments of the present disclosure pertain.

Although the embodiments of the present disclosure have been shown and described above, it can be understood that the above embodiments are exemplary and should not be construed as limiting the present disclosure. A person of ordinary skill in the art can make changes, modifications, replacements and variations to the foregoing embodiments within the scope of the present disclosure.

## Claims

1. A data scanning method, applied in a mobile terminal, the data scanning method comprising:
obtaining trigger-associated information;
starting to scan data in response to the trigger-associated information satisfying a trigger condition;
obtaining interruption-associated information in a process of scanning the data; and
stopping scanning the data in response to the interruption-associated information satisfying a stop condition.

2. The data scanning method according to claim 1, wherein the trigger-associated information comprises a screen state of the mobile terminal and a battery state of the mobile terminal;
in response to the screen state being a screen-off state and the battery state being a charging state, the trigger-associated information is determined as satisfying the trigger condition; and
said starting to scan the data in response to the trigger-associated information satisfying the trigger condition comprises:
starting to scan the data after a predetermined wait time period.

3. The data scanning method according to claim 1, wherein the trigger-associated information comprises a screen state of the mobile terminal, a battery state of the mobile terminal, and a system time; and
in response to the screen state being a screen-off state, the battery state being a charging state, and the system time being a predetermined time, the trigger-associated information is determined as satisfying the trigger condition.

4. The data scanning method according to claim 3, wherein the predetermined time is randomly set by the mobile terminal.

5. The data scanning method according to claim 1, wherein the trigger-associated information comprises a screen state of the mobile terminal, a battery state of the mobile terminal, a system time, and a scanning time interval; and
in response to the screen state being a screen-off state, the battery state being a charging state, and an interval between a current system time and a system time at an end of a previous scan being greater than a predetermined time interval, the trigger-associated information is determined as satisfying the trigger condition.

6. The data scanning method according to claim 1, wherein the trigger-associated information comprises a screen state of the mobile terminal, a battery state of the mobile terminal, and a scanning interruption factor; and
in response to the screen state being a screen-off state, the battery state being a charging state, and the scanning interruption factor of a previous scan being that the screen state changes from the screen-off state to a screen-on state, the trigger-associated information is determined as satisfying the trigger condition.

7. The data scanning method according to claim 1, wherein said starting to scan the data and obtaining the interruption-associated information in the process of scanning the data comprise:
adding self-protection for a current scanning process;
performing a predetermined scan on the data, wherein the predetermined scan comprises at least one of a scan for video highlight, a scan for person, and a scan for tag;
releasing the self-protection after scanning the data; and
obtaining the interruption-associated information.

8. The data scanning method according to claim 7, wherein in response to the predetermined scan comprising at least two of the scan for video highlight, the scan for person, and the scan for tag, said performing the predetermined scan on the data comprises:
performing a plurality of predetermined scans serially.

9. The data scanning method according to claim 1, wherein the interruption-associated information comprises a screen state of the mobile terminal, a battery state of the mobile terminal, a system time, and a remaining battery capacity;
in response to the screen state being a screen-off state, the battery state being a charging state, the system time being within a first predetermined time range, and the remaining battery capacity being greater than a first battery capacity threshold, the interruption-associated information is determined as not satisfying the stop condition;
in response to the screen state being the screen-off state, the battery state being the charging state, the system time being within a second predetermined time range, and the remaining battery capacity being greater than a second battery capacity threshold, the interruption-associated information is determined as not satisfying the stop condition, wherein the first battery capacity threshold is smaller than the second battery capacity threshold; and
the data scanning method further comprises:
continuing scanning the data in response to the interruption-associated information not satisfying the stop condition.

10. The data scanning method according to claim 1, wherein the interruption-associated information comprises a screen state of the mobile terminal, a battery state of the mobile terminal, and a temperature;
in response to the screen state being a screen-off state, the battery state being a charging state, and the temperature being smaller than a predetermined temperature, the interruption-associated information is determined as not satisfying the stop condition; and
the data scanning method further comprises:
continuing scanning the data in response to the interruption-associated information not satisfying the stop condition.

11. The data scanning method according to claim 1, wherein the interruption-associated information comprises a screen state of the mobile terminal, a battery state of the mobile terminal, and an accumulated time length;
in response to the screen state being a screen-off state, the battery state being a charging state, and the accumulated time length being smaller than a predetermined accumulated time length, the interruption-associated information is determined as not satisfying the stop condition; and
the data scanning method further comprises:
continuing scanning the data in response to the interruption-associated information not satisfying the stop condition.

12. The data scanning method according to claim 1, wherein the interruption-associated information comprises a screen state of the mobile terminal, a battery state of the mobile terminal, a system time, a remaining battery capacity, a temperature, and an accumulated time length;
in response to the screen state being a screen-off state, the battery state being a charging state, the system time being within a first predetermined time range, the remaining battery capacity being greater than a first battery capacity threshold, the temperature being smaller than a predetermined temperature, and the accumulated time length being smaller than a predetermined accumulated time length, the interruption-associated information is determined as not satisfying the stop condition;
in response to the screen state being the screen-off state, the battery state being the charging state, the system time being within a second predetermined time range, the remaining battery capacity being greater than a second battery capacity threshold, the temperature being smaller than the predetermined temperature, and the accumulated time length being smaller than the predetermined accumulated time length, the interruption-associated information is determined as not satisfying the stop condition, wherein the first battery capacity threshold is smaller than the second battery capacity threshold; and
the data scanning method further comprises:
continuing scanning the data in response to the interruption-associated information not satisfying the stop condition.

13. The data scanning method according to claim 1, wherein the mobile terminal comprises a current application and one or more applications other than the current application, and the data scanning method comprises:
determining whether one of the one or more applications other than the current application is scanning other data at a current time;
starting, by the current application, to scan the data in response to none of the one or more applications other than the current application being scanning the other data; and
canceling, by the current application, scanning the data in response to one of the one or more applications other than the current application being scanning the other data.

14. A mobile terminal, comprising a processor configured to:
obtain trigger-associated information;
start to scan data in response to the trigger-associated information satisfying a trigger condition;
obtain interruption-associated information in a process of scanning the data; and
stop scanning the data in response to the interruption-associated information satisfying a stop condition.

15. The mobile terminal according to claim 14, wherein the trigger-associated information comprises a screen state of the mobile terminal and a battery state of the mobile terminal;
in response to the screen state being a screen-off state and the battery state being a charging state, the trigger-associated information is determined as satisfying the trigger condition; and
the processor is further configured to start to scan the data after a predetermined wait time period, in response to the trigger-associated information satisfying the trigger condition.

16. The mobile terminal according to claim 14, wherein the trigger-associated information comprises a screen state of the mobile terminal, a battery state of the mobile terminal, and a system time; and
in response to the screen state being a screen-off state, the battery state being a charging state, and the system time being a predetermined time, the trigger-associated information is determined as satisfying the trigger condition.

17. The data scanning method according to claim 16, wherein the predetermined time is randomly set by the mobile terminal.

18. The mobile terminal according to claim 14, wherein the trigger-associated information comprises a screen state of the mobile terminal, a battery state of the mobile terminal, a system time, and a scanning time interval; and
in response to the screen state being a screen-off state, the battery state being a charging state, and an interval between a current system time and a system time at an end of a previous scan being greater than a predetermined time interval, the trigger-associated information is determined as satisfying the trigger condition.

19. The mobile terminal according to claim 14, wherein the trigger-associated information comprises a screen state of the mobile terminal, a battery state of the mobile terminal, and a scanning interruption factor; and
in response to the screen state being a screen-off state, the battery state being a charging state, and the scanning interruption factor of a previous scan being that the screen state changes from the screen-off state to a screen-on state, the trigger-associated information is determined as satisfying the trigger condition.

20. The mobile terminal according to claim 14, wherein the processor is further configured to:
add self-protection for a current scanning process;
perform a predetermined scan on the data, wherein the predetermined scan comprises at least one of a scan for video highlight, a scan for person, and a scan for tag;
release the self-protection after scanning the data; and
obtain the interruption-associated information.

21. The mobile terminal according to claim 20, wherein in response to the predetermined scan comprising at least two of the scan for video highlight, the scan for person, and the scan for tag, the processor is further configured to perform a plurality of predetermined scans serially.

22. The mobile terminal according to claim 14, wherein the interruption-associated information comprises a screen state of the mobile terminal, a battery state of the mobile terminal, a system time, and a remaining battery capacity;
in response to the screen state being a screen-off state, the battery state being a charging state, the system time being within a first predetermined time range, and the remaining battery capacity being greater than a first battery capacity threshold, the interruption-associated information is determined as not satisfying the stop condition;
in response to the screen state being the screen-off state, the battery state being the charging state, the system time being within a second predetermined time range, and the remaining battery capacity being greater than a second battery capacity threshold, the interruption-associated information is determined as not satisfying the stop condition, wherein the first battery capacity threshold is smaller than the second battery capacity threshold; and
the processor is further configured to continue scanning the data in response to the interruption-associated information not satisfying the stop condition.

23. The mobile terminal according to claim 14, wherein the interruption-associated information comprises a screen state of the mobile terminal, a battery state of the mobile terminal, and a temperature;
in response to the screen state being a screen-off state, the battery state being a charging state, and the temperature being smaller than a predetermined temperature, the interruption-associated information is determined as not satisfying the stop condition; and
the processor is further configured to continue scanning the data in response to the interruption-associated information not satisfying the stop condition.

24. The mobile terminal according to claim 14, wherein the interruption-associated information comprises a screen state of the mobile terminal, a battery state of the mobile terminal, and an accumulated time length;
in response to the screen state being a screen-off state, the battery state being a charging state, and the accumulated time length being smaller than a predetermined accumulated time length, the interruption-associated information is determined as not satisfying the stop condition; and
the processor is further configured to continue scanning the data in response to the interruption-associated information not satisfying the stop condition.

25. The mobile terminal according to claim 14, wherein the interruption-associated information comprises a screen state of the mobile terminal, a battery state of the mobile terminal, a system time, a remaining battery capacity, a temperature, and an accumulated time length;
in response to the screen state being a screen-off state, the battery state being a charging state, the system time being within a first predetermined time range, the remaining battery capacity being greater than a first battery capacity threshold, the temperature being smaller than a predetermined temperature, and the accumulated time length being smaller than a predetermined accumulated time length, the interruption-associated information is determined as not satisfying the stop condition;
in response to the screen state being the screen-off state, the battery state being the charging state, the system time being within a second predetermined time range, the remaining battery capacity being greater than a second battery capacity threshold, the temperature being smaller than the predetermined temperature, and the accumulated time length being smaller than the predetermined accumulated time length, the interruption-associated information is determined as not satisfying the stop condition, wherein the first battery capacity threshold is smaller than the second battery capacity threshold; and
the processor is further configured to continue scanning the data in response to the interruption-associated information not satisfying the stop condition.

26. The mobile terminal according to claim 14, wherein the mobile terminal comprises a current application and one or more applications other than the current application, and the processor is further configured to:
determine whether one of the one or more applications other than the current application is scanning other data at a current time;
control the current application to start to scan the data in response to none of the one or more applications other than the current application being scanning the other data; and
control the current application to cancel scanning the data in response to one of the one or more applications other than the current application being scanning the other data.

27. A non-volatile computer-readable storage medium comprising computer-readable instructions, wherein the computer-readable instructions, when executed by a processor, cause a processor to implement the data scanning method according to any one of claims 1 to 13.
